# EUROPEAN PATENT APPLICATION

(11) **EP 4 803 954 A1**
(43) Date of publication of application: **09.09.2026**
(21) Application number: 24938078.3
(22) Date of filing: 26.12.2024
(51) Int. Cl.: G02C 11/00, H04R 9/06, G02C 11/06, H04R 13/00

(54) **GLASSES**

(71) Applicant: Shenzhen Shokz Co., Ltd., Shenzhen, Guangdong 518108 (CN)
(72) Inventor: WANG, Zhen, Shenzhen, Guangdong 518108 (CN)
(74) Representative: Wang, Bo
(86) International application number: PCT/CN2024/142604
(87) International publication number: WO 2026/137303

(57) **Abstract**

The present disclosure provides a pair of eyeglasses, comprising: a sound-producing device including a diaphragm and a magnetic circuit assembly; an eyeglass temple configured to accommodate the sound-producing device, and an eyeglass rim. A front cavity is formed at a side of the diaphragm away from the magnetic circuit assembly, and a back cavity is formed at a side of the diaphragm facing the magnetic circuit assembly. The eyeglass temple is provided with a sound outlet hole and a pressure relief hole, the sound outlet hole is in communication with the back cavity, and the pressure relief hole is in communication with the front cavity. In a wearing state, the sound outlet hole is closer to an ear canal opening of a user than the pressure relief hole, and an opening area of the sound outlet hole is greater than an opening area of the pressure relief hole.

## Description

### TECHNICAL FIELD

The present disclosure relates to the field of eyeglasses, and in particular, to eyeglasses with an audio playback function.

### BACKGROUND

In modern life, eyeglasses with an audio playback function have gained increasing popularity. Particularly, with the development of AR/VR eyeglasses, functions such as real-time translation, voice assistants, voice interaction, immersive sound, etc., of the AR/VR eyeglasses rely heavily on eyeglasses equipped with the audio playback function. However, unlike in-ear or semi-in-ear earphones, sound-producing devices in eyeglasses are typically located relatively far from an ear canal opening. The greater the distance between the sound-producing device and the ear canal is, the more significant the attenuation of low-frequency sound is. As a result, the mid-to-low frequency acoustic performance of eyeglasses with the audio playback function is often unsatisfactory. This is particularly evident when listening to music, where the deficiency the mid-to-low frequency performance tends to be inadequate.

To enhance the mid-to-low frequency acoustic performance of eyeglasses with the audio playback function, a displacement of a diaphragm in the sound-producing device may be increased. However, increasing the displacement of the diaphragm necessitates enlarging a size (e.g., a dimension along a vibration direction of the diaphragm) of a magnetic circuit assembly of the sound-producing device, which may cause a resonant frequency of a cavity of the sound-producing device to become too low, leading to significant sound leakage.

Therefore, how to ensure both the mid-to-low frequency sound quality of eyeglasses and reduce sound leakage remains a technical problem to be urgently resolved in the field.

### SUMMARY

The present disclosure provides a pair of eyeglasses, comprising: a sound-producing device including a diaphragm and a magnetic circuit assembly, wherein a front cavity is formed at a side of the diaphragm away from the magnetic circuit assembly, and a back cavity is formed at a side of the diaphragm facing the magnetic circuit assembly; an eyeglass temple configured to accommodate the sound-producing device, wherein the eyeglass temple is provided with a sound outlet hole and a pressure relief hole, the sound outlet hole is in communication with the back cavity, the pressure relief hole is in communication with the front cavity, in a wearing state of the eyeglasses, the sound outlet hole is closer to an ear canal opening of a user than the pressure relief hole, and an opening area of the sound outlet hole is greater than an opening area of the pressure relief hole; and an eyeglass rim connected to the eyeglass temple.

In some embodiments, the sound outlet hole is oriented toward the ear canal opening.

In some embodiments, the pressure relief hole is provided on an upper side surface of the eyeglass temple.

In some embodiments, a first vector is formed from a centroid of an outer end surface of the pressure relief hole to a centroid of an outer end surface of the sound outlet hole, and a second vector is formed from the centroid of the outer end surface of the sound outlet hole to a centroid of the ear canal opening, wherein an angle between a line defined by the first vector and a line defined by the second vector ranges from 0° to 60°.

In some embodiments, a first resonant frequency of a structure formed by the sound outlet hole and the back cavity ranges from 2 kHz to 4 kHz.

In some embodiments, the eyeglass temple is provided with a sound-tuning hole in communication with the back cavity, and a distance between a centroid of an outer end surface of the sound-tuning hole and a centroid of an outer end surface of the pressure relief hole is smaller than a distance between the centroid of the outer end surface of the sound-tuning hole and a centroid of an outer end surface of the sound outlet hole.

In some embodiments, a second resonant frequency of a structure formed by the sound-tuning hole, the sound outlet hole, and the back cavity is not less than 3 kHz.

In some embodiments, a difference between the second resonant frequency and a third resonant frequency of a structure formed by the pressure relief hole and the front cavity is not greater than 2 kHz.

In some embodiments, the sound-tuning hole and the pressure relief hole are provided on an upper side surface of the eyeglass temple, and the sound-tuning hole is closer to a junction between the eyeglass temple and the eyeglass rim than the pressure relief hole.

In some embodiments, an opening area of the sound-tuning hole is smaller than the opening area of the pressure relief hole.

In some embodiments, a ratio of the opening area of the sound-tuning hole to the opening area of the pressure relief hole is less than or equal to 10%.

In some embodiments, the magnetic circuit assembly includes a magnet and a magnetic conduction member at least partially surrounding the magnet and a magnetic gap is formed between the magnet and the magnetic conduction member. The sound-producing device further includes a voice coil connected to the diaphragm, and at least a portion of the voice coil extending into the magnetic gap. A through-hole is provided on the voice coil or the magnetic conduction member.

In some embodiments, a sound-absorbing material is provided on an inner side wall of the back cavity opposite to the sound outlet hole.

In some embodiments, the eyeglass temple is provided with a first sound-absorbing structure acoustically connected to the back cavity, the first sound-absorbing structure includes a first sound-absorbing cavity and a first sound-guiding tube, the first sound-absorbing cavity is in communication with the back cavity via the first sound-guiding tube, the first sound-absorbing structure has a first natural frequency, a structure formed by the sound outlet hole and the back cavity has a first resonant frequency, and an absolute value of a difference between the first natural frequency and the first resonant frequency is less than 1 kHz.

In some embodiments, the eyeglass temple is provided with a second sound-absorbing structure acoustically connected to the front cavity, the second sound-absorbing structure includes a second sound-absorbing cavity and a second sound-guiding tube, the second sound-absorbing cavity is in communication with the front cavity via the second sound-guiding tube, the second sound-absorbing structure has a second natural frequency and a corresponding quality factor, a structure formed by the sound outlet hole and the back cavity has a first resonant frequency, the quality factor causes a sound absorption response curve of the second sound-absorbing structure to have a first resonance peak and a second resonance peak, a first frequency corresponding to the first resonance peak is lower than a second frequency corresponding to the second resonance peak, the second natural frequency is located between the first frequency and the second frequency, and an absolute value of a difference between the first resonant frequency and the first frequency corresponding to the first resonance peak is less than 1 kHz.

In some embodiments, an axis of the sound outlet hole is inclined relative to a side wall on which the sound outlet hole is located.

In some embodiments, an opening length of the sound outlet hole is greater than or equal to an opening length of the pressure relief hole.

In some embodiments, an opening width of the sound outlet hole is greater than or equal to an opening width of the pressure relief hole.

In some embodiments, the eyeglass temple includes, along a length direction, a wearing segment and a connecting segment, the connecting segment is connected between the wearing segment and the eyeglass rim, a lower side wall of the connecting segment and a lower side wall of the wearing segment are connected by an arc-shaped plate, and at least a portion of the sound outlet hole is located on the arc-shaped plate.

### BRIEF DESCRIPTION OF THE DRAWINGS

The present disclosure is further described through exemplary embodiments. These exemplary embodiments are described in detail with reference to the drawings. These embodiments are non-limiting exemplary embodiments, in which like reference numerals represent similar structures throughout the several views of the drawings, wherein:
FIG. 1 is a schematic structural diagram of a pair of eyeglasses according to some embodiments of the present disclosure;
FIG. 2A is a schematic structural diagram of an eyeglass temple and a sound-producing device according to some embodiments of the present disclosure;
FIG. 2B is a schematic structural diagram of an eyeglass temple and a sound-producing device according to other embodiments of the present disclosure;
FIG. 3A is a diagram showing a frequency response curve of a structure formed by a sound outlet hole and a corresponding cavity according to embodiments of FIG. 2A and a frequency response curve of a structure formed by a sound outlet hole and a corresponding cavity according to embodiments of FIG. 2B of the present disclosure;
FIG. 3B is a diagram showing a frequency response curve of a structure formed by a pressure relief hole and a corresponding cavity according to embodiments of FIG. 2A and a frequency response curve of a structure formed by a pressure relief hole and a corresponding cavity according to embodiments of FIG. 2B of the present disclosure;
FIG. 3C is a diagram showing far-field sound leakage curves of eyeglasses corresponding to structures in embodiments of FIG. 2A and FIG. 2B of the present disclosure;
FIG. 4A is a cross-sectional view of an eyeglass temple and a sound-producing device according to some embodiments of the present disclosure;
FIG. 4B is another cross-sectional view of an eyeglass temple and a sound-producing device according to some embodiments of the present disclosure;
FIG. 5 is a schematic structural diagram of an eyeglass temple and a sound-producing device from another perspective according to some embodiments of the present disclosure;
FIG. 6 is a schematic structural diagram of a sound-producing device according to some embodiments of the present disclosure;
FIG. 7A is a schematic structural diagram of an eyeglass temple and a sound-producing device according to other embodiments of the present disclosure;
FIG. 7B is a schematic structural diagram of an eyeglass temple and a sound-producing device from another perspective according to other embodiments of the present disclosure;
FIG. 8A is a diagram showing frequency response curves of a structure formed by a sound outlet hole and a back cavity with and without a sound-tuning hole according to some embodiments of the present disclosure;
FIG. 8B is a diagram showing frequency response curves of a structure formed by a pressure relief hole and a front cavity with and without a sound-tuning hole according to some embodiments of the present disclosure;
FIG. 9 is a diagram showing far-field sound leakage curves of eyeglasses with and without a sound-tuning hole according to some embodiments of the present disclosure;
FIG. 10 is a schematic structural diagram of a sound-producing device and a sound-absorbing material according to some embodiments of the present disclosure;
FIG. 11 is a schematic structural diagram of a sound-producing device and a second sound-absorbing structure according to some embodiments of the present disclosure;
FIG. 12 is a diagram showing frequency response curves of a structure formed by a pressure relief hole and a front cavity with and without a second sound-absorbing structure according to some embodiments of the present disclosure; and
FIG. 13 is a diagram showing far-field sound leakage curves of eyeglasses with and without a second sound-absorbing structure according to some embodiments of the present disclosure.

Reference numerals in the drawings: 1: eyeglasses; 10: sound-producing device; 20: eyeglass temple; 30: eyeglass rim; 110: diaphragm; 120: magnetic circuit assembly; 121: magnet; 122: magnetic conduction member; 130: voice coil; 140: front cavity; 150: back cavity; 160: through-hole; 170: sound-absorbing material; 180: second sound-absorbing structure; 181: second sound-absorbing cavity; 182: second sound-guiding tube; 210: sound outlet hole; 220: pressure relief hole; 230: sound-tuning hole; 240: connecting segment; 250: wearing segment; 260: arc-shaped plate.

### DETAILED DESCRIPTION

In order to more clearly illustrate the technical solutions of the embodiments of the present disclosure, the accompanying drawings to be used in the description of the embodiments will be briefly described below. Obviously, the accompanying drawings in the following description are only some examples or embodiments of the present disclosure, and that the present disclosure may be applied to other similar scenarios in accordance with these drawings without creative labor for those of ordinary skill in the art. Unless obviously acquired from the context or the context illustrates otherwise, the same numeral in the drawings refers to the same structure or operation.

It should be understood that "system," "device," "unit," and/or "module" as used herein is a way to distinguish between different components, elements, parts, sections, or assemblies at different levels. However, these words may be replaced by other expressions if they accomplish the same purpose.

As indicated in the present disclosure and in the claims, the singular forms "a," "an," and "the" may be intended to include the plural forms as well, unless the context clearly indicates otherwise. In general, the terms "comprise," "comprises," and/or "comprising," "include," "includes," and/or "including," when used in this disclosure, specify the presence of stated features, integers, steps, operations, elements, and/or components, but do not preclude the presence or addition of one or more other features, integers, steps, operations, elements, components, and/or groups thereof.

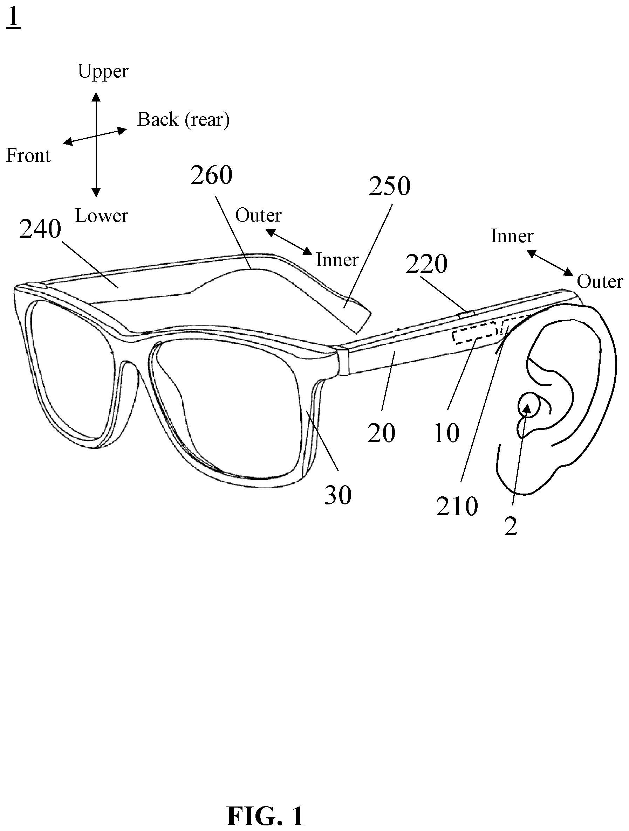

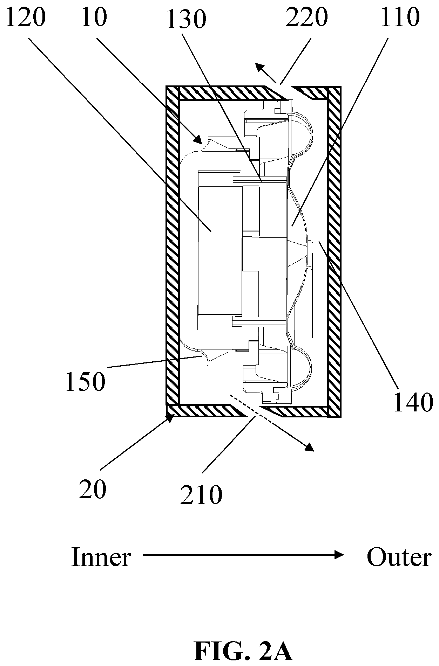

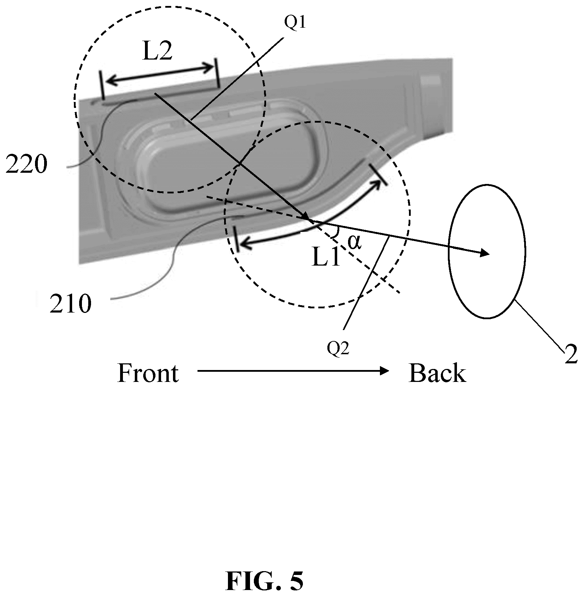

FIG. 1 is a schematic structural diagram of a pair of eyeglasses according to some embodiments of the present disclosure. FIG. 2A is a schematic structural diagram of an eyeglass temple and a sound-producing device according to some embodiments of the present disclosure. As shown in FIG. 1 and FIG. 2A, an embodiment of the present disclosure provides eyeglasses 1 having an audio playback function. The eyeglasses 1 include a sound-producing device 10, an eyeglass temple 20, and an eyeglass rim 30. The sound-producing device 10 includes a diaphragm 110 and a magnetic circuit assembly 120. A front cavity 140 is formed at a side of the diaphragm 110 away from the magnetic circuit assembly 120, and a back cavity 150 is formed at a side of the diaphragm 110 facing the magnetic circuit assembly 120. The eyeglass temple 20 accommodates the sound-producing device 10, and the eyeglass temple 20 is provided with a sound outlet hole 210 and a pressure relief hole 220. The sound outlet hole 210 is in communication with the back cavity 150, and the pressure relief hole 220 is in communication with the front cavity 140. In a wearing state of the eyeglasses 1, the sound outlet hole 210 is closer to an ear canal opening 2 of a user (refer to FIG. 1 and FIG. 5) than the pressure relief hole 220. The eyeglass rim 30 is connected to the eyeglass temple 20. It should be noted that the front, rear, upper, lower, inner, and outer directions indicated by arrows in FIG. 1 and FIG. 2A are defined relative to the eyeglasses 1 or the eyeglass temple 20. In the embodiments of the present disclosure, the sound-producing device 10 is oriented such that the front and rear (back) directions of the diaphragm 110 correspond to an inner-outer direction of the eyeglass temple 20 of the eyeglasses 1. However, in other embodiments, the orientation of the sound-producing device 10 may be altered, for example, the sound-producing device 10 is oriented such that the front and rear (back) directions of the diaphragm 110 correspond to the upper-lower direction of the eyeglass temple 20 of the eyeglasses 1.

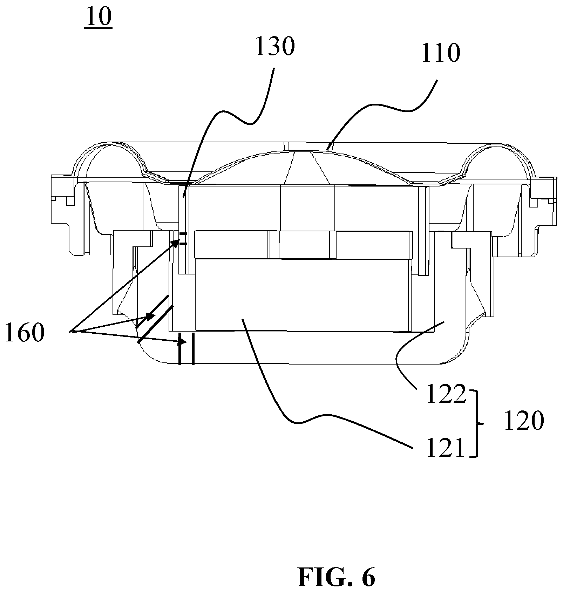

The sound-producing device 10 is a device for audio playback. The sound-producing device may be a loudspeaker, a speaker, or the like. The magnetic circuit assembly 120 may generate a magnetic field, which drives the diaphragm 110 to vibrate. The diaphragm 110 may vibrate under a driving action of the magnetic field generated by the magnetic circuit assembly 120, thereby generating sound waves on a front side and a rear side of the diaphragm 110, respectively (e.g., corresponding to the outer direction and the inner direction of the eyeglass temple 20, respectively). For example, the magnetic circuit assembly 120 may further include a voice coil, which refers to a coil through which electric current passes. The voice coil may be located at the side of the diaphragm 110 facing the magnetic circuit assembly 120 and fixed to the diaphragm 110. The voice coil is positioned within the magnetic field (e.g., a magnetic gap formed by the magnetic circuit assembly 120) generated by the magnetic circuit assembly 120. When an electrical signal (i.e., an audio signal) is applied to the voice coil, the voice coil vibrates under the influence of the magnetic field and drives the diaphragm 110 to vibrate, thereby causing the diaphragm 110 to generate sound waves and radiate sound outwardly. More descriptions regarding the sound-producing device 10 may be found in FIG. 6 and the related descriptions.

The eyeglass temple 20 may include a housing and an accommodation cavity enclosed by the housing. The sound-producing device 10 is accommodated within the accommodation cavity. In some embodiments, a dimension of the sound-producing device 10 along a vibration direction of the diaphragm 110 is relatively small. Therefore, when installing the sound-producing device 10 into the eyeglass temple 20, the vibration direction of the diaphragm 110 may be arranged substantially parallel to the inner-outer direction of the eyeglass temple 20, thereby reducing a dimension of the eyeglass temple 20 along the inner-outer direction and avoiding an excessive size of the eyeglass temple 20. In some embodiments, the diaphragm 110 of the sound-producing device 10 may be arranged facing an outer side of the eyeglasses 1 (i.e., facing an outer side wall of the housing of the eyeglass temple 20), and the magnetic circuit assembly 120 of the sound-producing device 10 may be arranged facing an inner side of the eyeglasses 1 (i.e., facing an inner side wall of the housing of the eyeglass temple 20). The diaphragm 110 may divide the accommodation cavity into at least the front cavity 140 located on the front side of the diaphragm 110 and the back cavity 150 located on the rear side of the diaphragm 110 along the vibration direction of the diaphragm 110.

Both the sound outlet hole 210 and the pressure relief hole 220 are provided on the housing of the eyeglass temple 20 and are in communication with the accommodation cavity. The sound outlet hole 210 is in communication with the back cavity 150 and is acoustically coupled to the back cavity 150. The vibration of the diaphragm 110 drives the air in the back cavity 150 to vibrate, generating air-conducted sound, which is transmitted to an external environment through the sound outlet hole 210. The pressure relief hole 220 is in communication with the front cavity 140 and is acoustically coupled to the front cavity 140. The vibration of the diaphragm 110 drives the air in the front cavity 140 to vibrate, generating air-conducted sound, which is transmitted to the external environment through the pressure relief hole 220.

By configuring the sound outlet hole 210 to be closer to the ear canal opening 2 than the pressure relief hole 220, the user primarily hears the sound output from the sound outlet hole 210. That is to say, when the user wears the eyeglasses 1, a sound pressure level of the sound from the sound outlet hole 210 at the ear canal opening 2 is greater than a sound pressure level of the sound from the pressure relief hole 220 at the ear canal opening 2. Specifically, the sound outlet hole 210 being closer to the ear canal opening 2 than the pressure relief hole 220 means that a distance from a centroid of an outer end face of the sound outlet hole 210 to a centroid of the ear canal opening 2 is less than a distance from a centroid of an outer end face of the pressure relief hole 220 to the centroid of the ear canal opening 2. The outer end face of the sound outlet hole 210 may be understood as an end face located on an outer wall surface of the housing of the eyeglass temple 20, and the centroid of the outer end face of the sound outlet hole 210 may be understood as a geometric center of that end face. The outer end face of the pressure relief hole 220 may be understood as an end face located on the outer wall surface of the housing of the eyeglass temple 20, and the centroid of the outer end face of the pressure relief hole 220 may be understood as a geometric center of that end face. The ear canal opening 2 refers to an external opening of the ear canal, and the centroid of the ear canal opening 2 refers to a geometric center of the external opening. Alternatively, the sound outlet hole 210 being closer to the ear canal opening 2 than the pressure relief hole 220 may also mean that a shortest distance between the sound outlet hole 210 and the ear canal opening 2 is less than a shortest distance between the pressure relief hole 220 and the ear canal opening 2. The shortest distance between the sound outlet hole 210 and the ear canal opening 2 may be understood as a length of a shortest line among all lines connecting an edge of the outer end face of the sound outlet hole 210 and an edge of the ear canal opening 2. Similarly, the shortest distance between the pressure relief hole 220 and the ear canal opening 2 may be understood as a length of a shortest line among all lines connecting an edge of the outer end face of the pressure relief hole 220 and the edge of the ear canal opening 2.

In some embodiments, to further enhance the sound pressure level at the ear canal opening 2, an opening area of the sound outlet hole 210 is greater than an opening area of the pressure relief hole 220. It should be noted that cross-sectional areas at different positions of the sound outlet hole 210 along an axial direction of the sound outlet hole 210 may be different. Therefore, the opening area of the sound outlet hole 210 refers to a smallest cross-sectional area among the cross-sectional areas. Similarly, the opening area of the pressure relief hole 220 refers to a smallest cross-sectional area among cross-sectional areas at different positions of the pressure relief hole 220 along an axial direction of the pressure relief hole 220. Since the opening area of the sound outlet hole 210 is greater than the opening area of the pressure relief hole 220, a greater portion of the sound is output to the external environment through the sound outlet hole 210, thereby enhancing the sound pressure level at the ear canal opening 2. Additionally, since the sound output from the pressure relief hole 220 may cancel out the sound output from the sound outlet hole 210 at the ear canal opening 2, configuring the pressure relief hole 220 with a smaller opening area also helps to enhance the sound pressure level at the ear canal opening 2 of the user.

Referring to the structure of the sound-producing device 10 shown in FIG. 2A, a dimension of the magnetic circuit assembly 120 in the vibration direction of the diaphragm 110 is greater than a dimension of the diaphragm 110 in the vibration direction of the diaphragm 110. Correspondingly, a dimension of the back cavity 150 in the vibration direction of the diaphragm 110 is larger than a dimension of the front cavity 140 in the vibration direction of the diaphragm 110. In some embodiments, to better orient an opening direction of the sound outlet hole 210 toward the ear canal opening 2 and an opening direction of the pressure relief hole 220 away from the ear canal opening 2, the sound outlet hole 210 and the pressure relief hole 220 may be provided on side walls that are not directly facing the diaphragm 110 or the magnetic circuit assembly 120. Under this configuration, it is more advantageous to form a larger through-hole as the sound outlet hole on the side wall corresponding to the back cavity 150 (the side wall not directly facing the magnetic circuit assembly 120). That is to say, by connecting the sound outlet hole 210 having a larger opening area to the back cavity 150, a higher sound pressure level at the ear canal opening 2 is ensured while minimizing a volume of the eyeglass temple 20.

Referring to FIG. 1, there are two eyeglass temples 20. In some embodiments, there is one sound-producing device 10, and one of the two eyeglass temples 20 accommodates the sound-producing device 10. In other embodiments, there are a plurality of sound-producing devices 10, such as two, three, four, etc. The plurality of sound-producing devices 10 are accommodated by the two eyeglass temples 20, respectively. In some embodiments, each eyeglass temple 20 includes a connecting segment 240 and a wearing segment 250 along a front-rear direction of the eyeglass temple 20. The connecting segment 240 is connected between the wearing segment 250 and the eyeglass rim 30. The wearing segment 250 is configured to engage with the ear of the user to ensure stable wearing of the eyeglasses 1, and the connecting segment 240 is used to connect the wearing segment 250 and the eyeglass rim 30. The sound outlet hole 210 is provided on the connecting segment 240 or the wearing segment 250. Alternatively, a portion of the sound outlet hole 210 is provided on the connecting segment 240, and another portion of the sound outlet hole 210 is provided on the wearing segment 250. The pressure relief hole 220 is provided on the connecting segment 240 or the wearing segment 250. Alternatively, a portion of the pressure relief hole 220 is provided on the connecting segment 240, and another portion of the pressure relief hole 220 is provided on the wearing segment 250. For more descriptions regarding the shape and structure of the eyeglass temple 20, please refer to the following sections.

In some embodiments, the sound outlet hole 210 and the pressure relief hole 220 may be located on a same side wall of the housing of the eyeglass temple 20. For example, both the sound outlet hole 210 and the pressure relief hole 220 may be located on one of an upper side wall, a lower side wall, an inner side wall, or an outer side wall of the housing. In other embodiments, the sound outlet hole 210 and the pressure relief hole 220 may be located on different side walls of the housing of the eyeglass temple 20. For example, the sound outlet hole 210 may be located on the upper side wall of the housing, and the pressure relief hole 220 may be located on the lower side wall of the eyeglass temple 20. As another example, the sound outlet hole 210 may be located on the lower side wall of the housing, and the pressure relief hole 220 may be located on the upper side wall of the eyeglass temple 20. It should be noted that the upper side wall of the housing refers to a side wall facing the top of the human head when the eyeglasses 1 are in the wearing state, the lower side wall of the eyeglass temple 20 refers to a side wall facing the bottom of the human feet when the eyeglasses 1 are in the wearing state, the inner side wall of the housing refers to a side wall facing the human face when the eyeglasses 1 are in the wearing state, and the outer side wall of the housing refers to a side wall facing away from the human face when the eyeglasses 1 are in the wearing state. For further descriptions on the placement of the sound outlet hole 210 and the pressure relief hole 220 on the eyeglass temple 20, please refer to the following sections.

The eyeglass rim 30 and the two eyeglass temples 20 together form a frame of the eyeglasses 1. The eyeglass rim 30 is a component used to support and mount optical elements of the eyeglasses 1. For example, when the eyeglasses 1 are myopic eyeglasses, sunglasses, hyperopic eyeglasses, etc., the eyeglass rim 30 may support and mount lenses of the eyeglasses 1. As another example, when the eyeglasses 1 are AR or VR eyeglasses, the eyeglass rim 30 may support and mount a display device of the eyeglasses 1. In some embodiments, the eyeglass temples 20 are connected to the eyeglass rim 30 via hinges, allowing the eyeglass temples 20 to be folded in a non-wearing state.

By providing the sound outlet hole 210 and the pressure relief hole 220, sound leakage from the eyeglasses 1 can be reduced. The specific principle is as follows: a sound wave from the front side of the diaphragm 110 is emitted through the pressure relief hole 220, and a sound wave from the rear side of the diaphragm 110 is emitted through the sound outlet hole 210. Since the sound waves from the front side and the rear side of the diaphragm 110 have a phase difference of 180°, an acoustic dipole with a directivity may be formed. The acoustic dipole refers to a sound source composed of two monopole sources that are very close to each other (with a spacing much smaller than the wavelength), have essentially equal intensities, and opposite phases (a 180° phase difference). A sound field of the acoustic dipole exhibits an approximate "8" pattern, with the highest sound pressure level along a line connecting the two monopole sources, thereby providing the directivity and reducing sound leakage. However, when sound waves from the front side and the rear side of the diaphragm 110 are radiated to the external environment after passing through the front cavity 140 and the back cavity 150, if cavity resonance occurs in the front cavity 140 or the back cavity 150, the phase of the sound waves may undergo abrupt changes, disrupting the effect of the acoustic dipole. This results in a loss of directivity, leading to increased sound leakage. For the sound-producing device 10, increasing a size of the magnetic circuit assembly 120 can enhance the mid-to-low frequency acoustic performance of the eyeglasses 1. However, the magnetic circuit assembly 120 also reduces a resonant frequency of the back cavity 150, and the larger the size (e.g., the dimension along the vibration direction of the diaphragm) of the magnetic circuit assembly 120 is, the lower the resonant frequency of the back cavity 150 is. Due to the presence of the magnetic circuit assembly 120, the resonant frequency of the back cavity 150 is lower than a resonant frequency of the front cavity 140. When the sound frequency falls between the resonant frequency of the back cavity 150 and the resonant frequency of the front cavity 140, the acoustic dipole cannot effectively reduce sound leakage. Therefore, to improve sound quality by increasing the size of the magnetic circuit assembly while still reducing sound leakage, it is desirable to maximize the resonant frequency of the back cavity 150 and to keep the resonant frequencies of the front cavity 140 and the back cavity 150 as close to each other as possible.

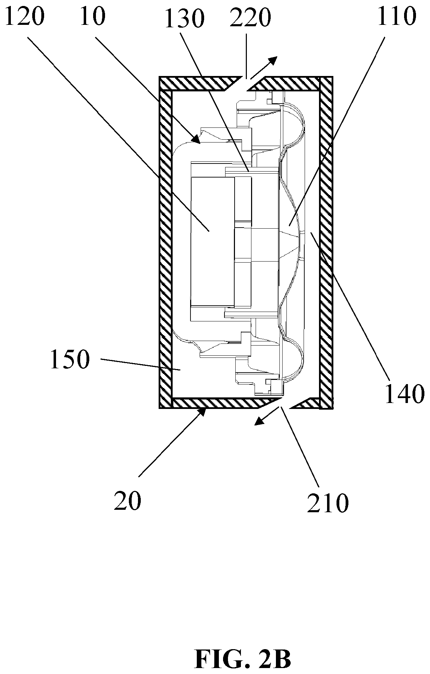

FIG. 2B is a schematic structural diagram of an eyeglass temple and a sound-producing device according to other embodiments of the present disclosure. The difference between the embodiment shown in FIG. 2B and the embodiment shown in FIG. 2A is that, in the embodiment of FIG. 2B, the sound outlet hole 210 provided on the eyeglass temple 20 is in communication with the front cavity 140, and the pressure relief hole 220 provided on the eyeglass temple 20 is in communication with the back cavity 150. Since the dimension of the back cavity 150 in the vibration direction is larger than the dimension of the front cavity 140, it is difficult to form the sound outlet hole 210 with a relatively large opening area on the side wall corresponding to the front cavity 140 in the embodiment of FIG. 2B. This results in a lower sound pressure level of sound (especially for a low-frequency sound) at the ear canal opening 2. Additionally, if attempting to increase the opening area of the sound outlet hole 210, structural adjustments to the eyeglass temple 20 may be required to enlarge a volume of the front cavity 140, which may lead to an increase in the overall volume of the eyeglass temple 20.

Comparing the embodiment shown in FIG. 2A with the embodiment shown in FIG. 2B of the present disclosure, it can be concluded that in the embodiment of FIG. 2A, by configuring the sound outlet hole 210 to be in communication with the back cavity 150, it is advantageous to provide the sound outlet hole 210 with a relatively large opening area, thereby ensuring a higher sound pressure level at the ear canal opening 2. Furthermore, directing the sound wave generated by the diaphragm 110 through the back cavity 150 and outputting the sound wave through the sound outlet hole 210 with a relatively large opening area helps to increase the resonant frequency of the back cavity 150 (compared to the embodiment of FIG. 2B), thereby counteracting the negative impact of the magnetic circuit assembly 120 on the resonant frequency of the back cavity 150. Additionally, by configuring the pressure relief hole 220 with a relatively small opening area to be in communication with the front cavity 140, the sound wave generated by the diaphragm 110 is output through the pressure relief hole 220 with a relatively small opening area after passing through the front cavity 140. This reduces the resonant frequency of the front cavity 140 (compared to the embodiment of FIG. 2B) and narrows the difference between the resonant frequencies of the front cavity 140 and the back cavity 150.

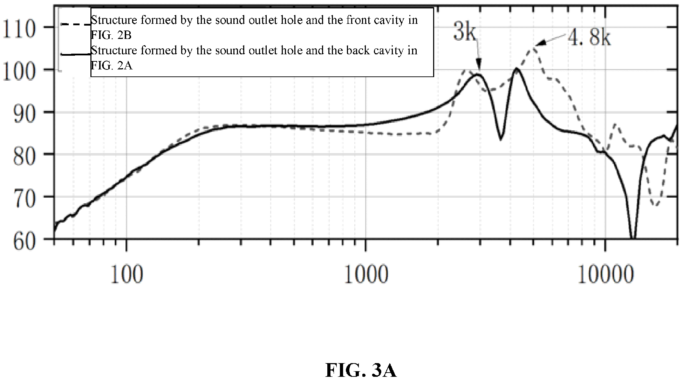

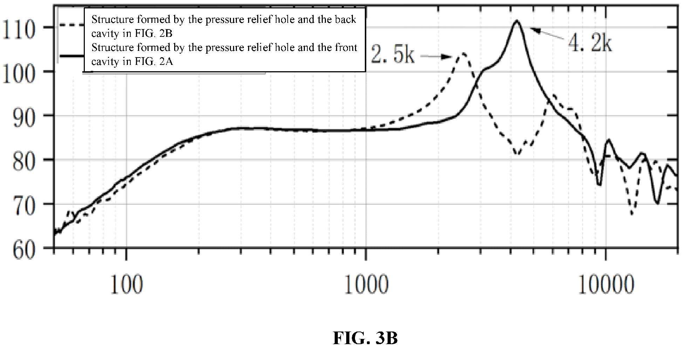

Frequency response curves of the relevant structures in the embodiment of FIG. 2A and the embodiment of FIG. 2B are compared below to further illustrate the technical effects of the embodiment shown in FIG. 2A. FIG. 3A is a diagram showing a frequency response curve of a structure formed by a sound outlet hole and a corresponding cavity according to embodiments of FIG. 2A and a frequency response curve of a structure formed by a sound outlet hole and a corresponding cavity according to embodiments of FIG. 2B of the present disclosure. FIG. 3B is a diagram showing a frequency response curve of a structure formed by a pressure relief hole and a corresponding cavity according to embodiments of FIG. 2A and a frequency response curve of a structure formed by a pressure relief hole and a corresponding cavity according to embodiments of FIG. 2B of the present disclosure. The horizontal axis in FIG. 3A and FIG. 3B represents frequency (Freq, unit: kHz), and the vertical axis represents output sound pressure level (SPL, unit: dB). Comparing FIG. 3A and FIG. 3B, the resonant frequencies of the structures formed by the sound outlet hole 210 and the corresponding cavities (the cavities communicating with the sound outlet hole 210) in the embodiments of FIG. 2A and FIG. 2B, as well as the resonant frequencies of the structures formed by the pressure relief hole 220 and the corresponding cavities (the cavities communicating with the pressure relief hole 220), can be observed. It should be noted that in the present disclosure, a resonant frequency of a structure formed by a cavity (e.g., the front cavity 140, the back cavity 150) and a corresponding component (e.g., the sound outlet hole 210, the pressure relief hole 220, or the sound-tuning hole described below) may be understood as the resonant frequency of the cavity under the influence of the corresponding component. In some parts of the present disclosure, the resonant frequency of the structure formed by a cavity (e.g., the front cavity 140, the back cavity 150) and the corresponding component (e.g., the sound outlet hole 210, the pressure relief hole 220, or the sound-tuning hole described below) may be simplified and referred to as the resonant frequency of the cavity (e.g., the front cavity 140, the back cavity 150).

The frequency response curve of the structure formed by the sound outlet hole 210 and the front cavity 140, and the frequency response curve of the structure formed by the pressure relief hole 220 and the back cavity 150 in the embodiment shown in FIG. 2B are shown by dashed lines in FIG. 3A and FIG. 3B, respectively. As can be seen from the dashed lines in FIG. 3A and FIG. 3B, the resonant frequency of the structure formed by the sound outlet hole 210 and the front cavity 140 is approximately 4.8 kHz; and the resonant frequency of the structure formed by the pressure relief hole 220 and the back cavity 150 is approximately 2.5 kHz. The difference between the resonant frequency of the structure formed by the sound outlet hole 210 and the front cavity 140 and the resonant frequency of the structure formed by the pressure relief hole 220 and the back cavity 150 is relatively large (approximately 2.3 kHz). This means that the eyeglasses 1 cannot achieve sound leakage reduction for sound in the frequency range of 2.5 kHz to 4.8 kHz.

The frequency response curve of the structure formed by the sound outlet hole 210 and the back cavity 150, and the frequency response curve of the structure formed by the pressure relief hole 220 and the front cavity 140 in the embodiment shown in FIG. 2A are shown by solid lines in FIG. 3A and FIG. 3B, respectively. As can be seen from the solid lines in FIG. 3A and FIG. 3B, the resonant frequency of the structure formed by the sound outlet hole 210 and the back cavity 150 is approximately 3 kHz; and the resonant frequency of the structure formed by the pressure relief hole 220 and the front cavity 140 is approximately 4.2 kHz. The difference between the resonant frequency of the structure formed by the sound outlet hole 210 and the back cavity 150 and the resonant frequency of the structure formed by the pressure relief hole 220 and the front cavity 140 is reduced (to approximately 1.2 kHz). This means that the eyeglasses 1 cannot achieve sound leakage reduction only for sound in the frequency range of 3 kHz to 4.2 kHz. Therefore, by configuring the sound outlet hole 210 to be in communication with the back cavity 150 and the pressure relief hole 220 to be in communication with the front cavity 140, the frequency range over which sound leakage reduction is effective can be expanded, thereby enhancing the sound leakage reduction performance of the eyeglasses 1.

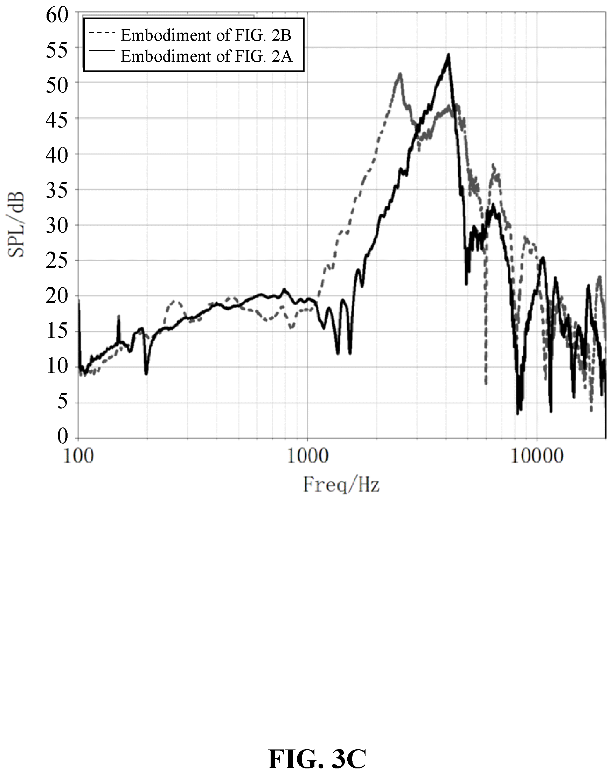

FIG. 3C is a diagram showing far-field sound leakage curves of the eyeglasses 1 corresponding to the structures in the embodiments of FIG. 2A and FIG. 2B of the present disclosure. To further verify the sound leakage reduction effect, the far-field sound leakage of the embodiment of FIG. 2A and the far-field sound leakage of the embodiment of FIG. 2B were compared and tested, as shown in FIG. 3C. The horizontal axis in FIG. 3C represents frequency (Freq, unit: kHz), and the vertical axis represents output sound pressure level (SPL, unit: dB). Clearly, in the embodiment of FIG. 2B (corresponding to the dashed line in FIG. 3C), the maximum sound leakage peak occurs at the frequency of 2.5 kHz, which corresponds to the resonant frequency of the structure formed by the pressure relief hole 220 and the back cavity 150. In the frequency range of 1 kHz to 3 kHz, the sound pressure level of the far-field sound leakage in the embodiment of FIG. 2A (corresponding to the solid line in FIG. 3C) is generally lower than that in the embodiment of FIG. 2B. This demonstrates that the embodiment of FIG. 2A provides a better sound leakage reduction effect.

In some embodiments, a first resonant frequency of the structure formed by the sound outlet hole 210 and the back cavity 150 is greater than or equal to 2 kHz. In some embodiments, the first resonant frequency of the structure formed by the sound outlet hole 210 and the back cavity 150 is greater than 2.8 kHz. In some embodiments, the first resonant frequency of the structure formed by the sound outlet hole 210 and the back cavity 150 ranges from 2 kHz to 4 kHz. For example, the first resonant frequency may be 2 kHz, 2.5 kHz, 3 kHz, 3.3 kHz, 4 kHz, etc. By configuring the first resonant frequency within the above range (e.g., less than or equal to 4 kHz), it is possible to prevent the first resonant frequency from becoming excessively high and exceeding the resonant frequency of the structure formed by the pressure relief hole 220 and the front cavity 140, thereby improving the sound leakage reduction performance of the eyeglasses (if the first resonant frequency is higher than the resonant frequency of the structure formed by the pressure relief hole 220 and the front cavity 140, increasing the first resonant frequency can reduce the sound leakage reduction effect). Additionally, as mentioned above, to ensure the sound leakage reduction effect of the eyeglasses 1, the resonant frequency of the back cavity 150 affects a frequency band (this band is above the resonant frequency of the back cavity 150) where the acoustic dipole cannot achieve the sound leakage reduction effect. The higher the resonant frequency of the back cavity 150, the wider the frequency band below the resonant frequency of the back cavity 150 where sound leakage reduction is effective. By configuring the first resonant frequency within the above range (e.g., greater than or equal to 2 kHz), the first resonant frequency is prevented from becoming too low, thereby avoiding an excessively wide frequency band where the acoustic dipole cannot achieve the sound leakage reduction effect and preventing an overly large difference between the first resonant frequency and the resonant frequency of the front cavity 140.

In some embodiments, the resonant frequency (corresponding to the third resonant frequency mentioned below) of the structure formed by the pressure relief hole 220 and the front cavity 140 is less than or equal to 5 kHz. In some embodiments, the resonant frequency (corresponding to the third resonant frequency mentioned below) of the structure formed by the pressure relief hole 220 and the front cavity 140 is greater than 4 kHz and less than or equal to 5 kHz. For example, the resonant frequency of the structure formed by the pressure relief hole 220 and the front cavity 140 may be 4.2 kHz, 4.5 kHz, 4.8 kHz, 5 kHz, etc. By configuring the resonant frequency of the structure formed by the pressure relief hole 220 and the front cavity 140 within the above range (e.g., greater than 4 kHz), this resonant frequency is ensured to be higher than the first resonant frequency, thereby improving the sound leakage reduction performance of the eyeglasses. Furthermore, as mentioned above, to ensure the sound leakage reduction performance of the eyeglasses 1, the resonant frequency of the front cavity 140 affects the frequency band (this band is below the resonant frequency of the front cavity 140) where the acoustic dipole cannot achieve the sound leakage reduction effect. By configuring the resonant frequency of the structure formed by the pressure relief hole 220 and the front cavity 140 within the above range (e.g., less than or equal to 5 kHz), the difference between this resonant frequency and the first resonant frequency can be minimized, thereby preventing an excessively wide frequency band where the acoustic dipole cannot achieve the sound leakage reduction effect due to an overly high resonant frequency of the structure formed by the pressure relief hole 220 and the front cavity 140.

For users with different head sizes, a distance between the sound outlet hole 210 and the ear along the front-rear direction may vary significantly when wearing the eyeglasses 1. In some embodiments, to ensure that the sound outlet hole 210 is not too far from the ear canal opening 2 for users with different head sizes when wearing the eyeglasses 1, the sound outlet hole 210 may extend along the front-rear direction of the eyeglass temple 20.

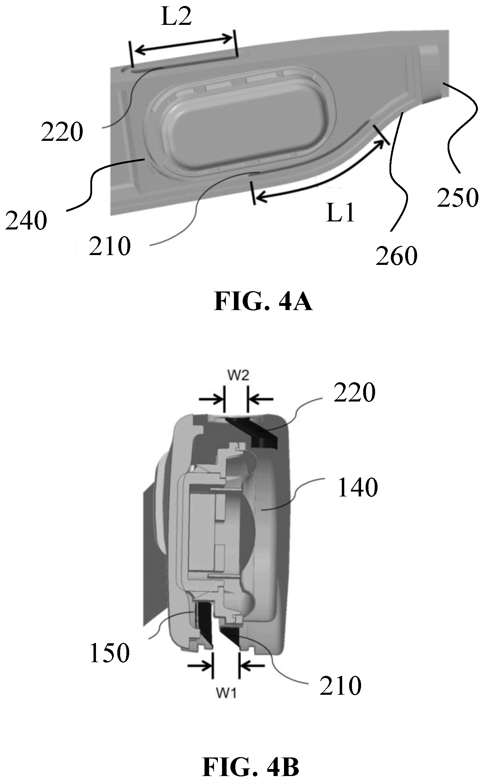

FIG. 4A is a cross-sectional view of an eyeglass temple 20 and a sound-producing device 10 according to some embodiments of the present disclosure. In some embodiments, as shown in FIG. 4A, an opening length L1 of the sound outlet hole 210 is greater than or equal to an opening length L2 of the pressure relief hole 220. This configuration increases the opening area of the sound outlet hole 210 so that the opening area of the sound outlet hole 210 is larger than the opening area of the pressure relief hole 220. It should be noted that the opening length L1 of the sound outlet hole 210 and the opening length L2 of the pressure relief hole 220 refer to length dimensions of the sound outlet hole 210 and the pressure relief hole 220, respectively, in a cross-section perpendicular to the inner-outer direction (as shown in the cross-section of FIG. 4A).

In some embodiments, a length of the sound outlet hole 210 along the front-rear direction of the eyeglass temple 20 may be increased to make the opening length L1 of the sound outlet hole 210 greater than or equal to the opening length L2 of the pressure relief hole 220. In other embodiments, the opening length L1 of the sound outlet hole 210 may be increased through structural design of the eyeglass temple 20 at a location where the sound outlet hole 210 is positioned. In some embodiments, as shown in FIG. 1 and FIG. 4A, the eyeglass temple 20 includes the wearing segment 250 and the connecting segment 240 along the length direction of the eyeglass temple 20. The connecting segment 240 is connected between the wearing segment 250 and the eyeglass rim 30. A lower side wall of the connecting segment 240 and a lower side wall of the wearing segment 250 are connected by an arc-shaped plate 260, and at least a portion of the sound outlet hole 210 is located on the arc-shaped plate 260. By positioning the at least a portion of the sound outlet hole 210 on the arc-shaped plate 260, the opening length L1 of the sound outlet hole 210 can be maximized within a limited space, thereby increasing the opening area of the sound outlet hole 210. Additionally, the arc-shaped plate 260 can also engage with the user's ear and head (e.g., by being clamped between the ear and the head), facilitating stable and comfortable wearing of the eyeglasses 1.

In some embodiments, as shown in FIG. 4B, an opening width W1 of the sound outlet hole 210 is greater than or equal to an opening width W2 of the pressure relief hole 220. It should be noted that the opening width of the sound outlet hole 210 and the opening width of the pressure relief hole 220 refer to width dimensions of the sound outlet hole 210 and the pressure relief hole 220, respectively, in a cross-section perpendicular to the front-rear direction. Based on the relevant descriptions above, since the dimension of the back cavity 150 in the vibration direction of the diaphragm is larger than the dimension of the front cavity 140 in the vibration direction of the diaphragm, an available space for positioning the sound outlet hole 210 is greater than an available space for positioning the pressure relief hole 220. Therefore, configuring the opening width W1 of the sound outlet hole 210 to be greater than or equal to the opening width W2 of the pressure relief hole 220 can increase the opening area of the sound outlet hole 210 without increasing the volume of the eyeglass temple 20.

In some embodiments, when the sound-producing device 10 is oriented such that the vibration direction of the diaphragm 110 is substantially parallel to the inner-outer direction of the eyeglass temple 20 (e.g., along the vibration direction of the diaphragm 110, the diaphragm 110 is arranged facing the outer side wall of the housing of the eyeglass temple, and the magnetic circuit assembly 120 is arranged facing the inner side wall of the housing of the eyeglass temple). Due to size constraints of the eyeglass temple 20, it becomes difficult to form the pressure relief hole 220 and the sound outlet hole 210 on the outer side wall and the inner side wall of the housing. In such cases, the sound outlet hole 210 is provided on the upper side wall or the lower side wall of the eyeglass temple 20, and the pressure relief hole 220 is also provided on the upper side wall or the lower side wall of the eyeglass temple 20. In some embodiments, to ensure the user's listening experience, both the sound outlet hole 210 and the pressure relief hole 220 are located on a front side of the ear in the wearing state. In some embodiments, when the user wears the eyeglasses 1, since the eyeglass temple 20 rests above the ear, the sound outlet hole 210 is located on the lower side wall of the eyeglass temple 20 and the pressure relief hole 220 is located on the upper side wall of the eyeglass temple 20 to optimize the user's listening experience.

In some embodiments, in the wearing state, the sound outlet hole 210 is oriented toward the ear. In some embodiments, the sound outlet hole 210 is oriented toward the ear canal opening 2. That is to say, in the wearing state, the sound outlet hole 210 faces the ear canal opening 2 of the user. In this case, the sound outlet hole 210 is located on a lower surface of the eyeglass temple 20. By configuring the sound outlet hole 210 to face the ear canal opening 2, the user's listening experience is enhanced when the user wears the eyeglasses 1.

In some embodiments, the pressure relief hole 220 is provided on an upper side surface of the eyeglass temple 20. Since the sound outlet hole 210, facing the ear canal opening 2, is located on a lower side surface of the eyeglass temple 20, placing the pressure relief hole 220 on the upper side surface of the eyeglass temple 20 allows the sound radiation of the acoustic dipole to be primarily directed along the upper-lower direction of the eyeglass temple 20 (e.g., an angle between the line connecting the two monopole sources and the upper-lower direction is less than 60°). As the ear canal opening 2 is located below the eyeglass temple 20 when the user wears the eyeglasses 1, this configuration helps improve the user's listening experience.

In some embodiments, the pressure relief hole 220 is closer to a junction between the eyeglass temple 20 and the eyeglass rim 30 than the sound outlet hole 210. In the wearing state, both the pressure relief hole 220 and the sound outlet hole 210 are located on the front side of the ear, while the eyeglass temple 20 is located on an upper side of the ear. This arrangement ensures that the line connecting the two monopole sources of the acoustic dipole points toward the back side of the eyeglass temple 20 at the lower side of the eyeglass temple 20, i.e., toward the ear, thereby enhancing the user's listening experience when the user wears the eyeglasses 1. In the present disclosure, the junction between the eyeglass temple 20 and the eyeglass rim 30 refers to a position of a hinge used to connect the eyeglass temple 20 and the eyeglass rim 30.

In some embodiments, a first vector Q1 is formed from the centroid of the outer end face of the pressure relief hole 220 to the centroid of the outer end face of the sound outlet hole 210, and a second vector Q2 is formed from the centroid of the outer end face of the sound outlet hole 210 to the centroid of the ear canal opening 2. An angle α between a line where the first vector Q1 is located and a line where the second vector Q2 is located ranges from 0° to 60°. As shown in FIG. 5, the first vector Q1 from the centroid of the outer end face of the pressure relief hole 220 to the centroid of the outer end face of the sound outlet hole 210 corresponds to the line connecting the two monopole sources of the acoustic dipole. Therefore, the angle α between the line where the first vector Q1 is located and the line where the second vector Q2 is located reflects a relative positional relationship between the ear canal opening 2 and the sound field. Since the sound pressure level of the sound field is strongest along the direction of the line connecting the two monopole sources, configuring the angle α between the line where the first vector Q1 is located and the line where the second vector Q2 is located to range from 0° to 60° ensures that the ear canal opening 2 of the user receives sound with a higher sound pressure level, thereby guaranteeing the user's listening experience when the user wears the eyeglasses 1. In some embodiments, the angle α between the line where the first vector Q1 is located and the line where the second vector Q2 is located ranges from 0° to 45°, which further improves the user's listening experience when wearing the eyeglasses 1.

In some embodiments, as shown in FIG. 2A, an axis of the sound outlet hole 210 is inclined relative to a side wall on which the sound outlet hole 210 is located. The axis of the sound outlet hole 210 may be represented by the dashed line at the sound outlet hole 210 in FIG. 2A. Merely by way of example, in the embodiment shown in FIG. 2A, the sound outlet hole 210 is provided on the lower side wall of the eyeglass temple 20. Under this configuration, the side wall on which the sound outlet hole 210 is located is the lower side wall of the housing of the eyeglass temple 20. The axis of the sound outlet hole 210 being inclined relative to the side wall on which the sound outlet hole 210 is located means that the axis is not perpendicular to the side wall. In some embodiments, an inclination direction of the axis of the sound outlet hole 210 relative to the side wall on which the sound outlet hole 210 is located may be such that a vector from a centroid of an inner end face of the sound outlet hole 210 to the centroid of the outer end face of the sound outlet hole 210 points toward the outer side of the eyeglass temple 20. The inner end face of the sound outlet hole 210 may be understood as an end surface located on the inner wall surface of the housing of the eyeglass temple 20. When the back cavity 150 of the sound-producing device is arranged facing the inner side wall of the housing of the eyeglass temple 20, the inner end surface of the sound outlet hole 210 is also close to the inner side of the eyeglass temple 20. Configuring the axis of the sound outlet hole 210 to be inclined relative to the side wall on which it is located allows the outer end face of the sound outlet hole 210 to be as close as possible to the outer side of the eyeglass temple 20, thereby reducing sound output from the sound outlet hole 210 and reflected by the head.

The vibration of the diaphragm 110 drives the air in the back cavity 150 to vibrate and generate sound, which forms a standing wave in the back cavity 150. Due to the formation of the standing wave, when the back cavity 150 resonates, a point of maximum sound pressure level appears near a position opposite to the sound outlet hole 220 within the back cavity 150. This phenomenon is referred to as standing wave resonance. The occurrence of standing wave resonance causes the resonant frequency of the back cavity 150 to decrease. When the frequency of the standing wave changes, the resonant frequency of the back cavity 150 also changes. Therefore, the resonant frequency of the back cavity 150 can be altered by changing the frequency at which the standing wave is generated. Research has found that manners to change the frequency at which the standing wave is generated include: modifying (e.g., shortening) a sound transmission path within the back cavity 150, altering the structure at a boundary where the standing wave is generated in the back cavity 150, etc. For example, by shortening the sound transmission path in the back cavity 150, standing waves with a relatively longer wavelength can be disrupted, thereby changing the frequency at which the standing wave is generated and increasing the resonant frequency of the back cavity 150. As another example, by changing a hard boundary where the standing wave is generated in the back cavity 150 to a soft boundary or an impedance boundary, standing waves with a relatively longer wavelength can also be disrupted, thereby changing the frequency at which the standing wave is generated and increasing the resonant frequency of the back cavity 150. Further descriptions are provided below with reference to FIG. 6-FIG. 10.

FIG. 6 is a schematic structural diagram of the sound-producing device 10 according to some embodiments of the present disclosure. In some embodiments, as shown in FIG. 6, the magnetic circuit assembly 120 includes a magnet 121 and a magnetic conduction member 122 at least partially surrounding the magnet 121. A magnetic gap is formed between the magnet 121 and the magnetic conduction member 122. The sound-producing device 10 further includes a voice coil 130 connected to the diaphragm 110, with at least a portion of the voice coil 130 extending into the magnetic gap. The magnet 121 is an element capable of generating a magnetic field. The magnet 121 may be a magnetic iron (including but not limited to a metal alloy magnet, a ferrite, etc.). The magnetic conduction member 122 may adjust a distribution of the magnetic field (e.g., the magnetic field generated by the magnetic element). The magnetic conduction member 122 may include a component made of a soft magnetic material. In some embodiments, the voice coil 130 may be annular. In some embodiments, the magnetic conduction member 122 may be annular. In other embodiments, the magnetic conduction member 122 may be cylindrical. In such cases, the magnetic conduction member 122 may include an annular side wall and a bottom wall.

In some embodiments, a through-hole 160 is provided on the voice coil 130 or the magnetic conduction member 122. A position and an extension direction of the through-hole 160 may vary. In some embodiments, the through-hole 160 may be provided on the voice coil 130, connecting an inner side and an outer side of the annular voice coil 130. Merely by way of example, the extension direction of the through-hole 160 may be perpendicular to the vibration direction of the diaphragm 110. In other embodiments, the through-hole 160 may be provided on the magnetic conduction member 122, connecting an inner side and an outer side of the cylindrical magnetic conduction member 122. Merely by way of example, the through-hole 160 is provided on the annular side wall of the magnetic conduction member 122, and under this configuration, the extension direction of the through-hole 160 may be perpendicular to the vibration direction of the diaphragm 110. Merely by way of example, the through-hole 160 is provided on the bottom wall of the magnetic conduction member 122, and under this configuration, the extension direction of the through-hole 160 may be parallel to the vibration direction of the diaphragm 110. When no through-hole 160 is provided, the transmission path of sound in the back cavity 150 is as shown by the dashed line in FIG. 6. After providing the through-hole 160 in any of the above embodiments, sound can pass through the through-hole 160, thereby allowing sound to be transmitted to the outer side of the back cavity 150 via a shorter transmission path. The through-hole 160 provided on the voice coil 130 or the magnetic conduction member 122 can shorten the transmission path of a portion of the sound within the back cavity 150, thereby changing the frequency at which the standing wave is generated in the back cavity 150, ultimately reducing the resonant frequency of the back cavity 150.

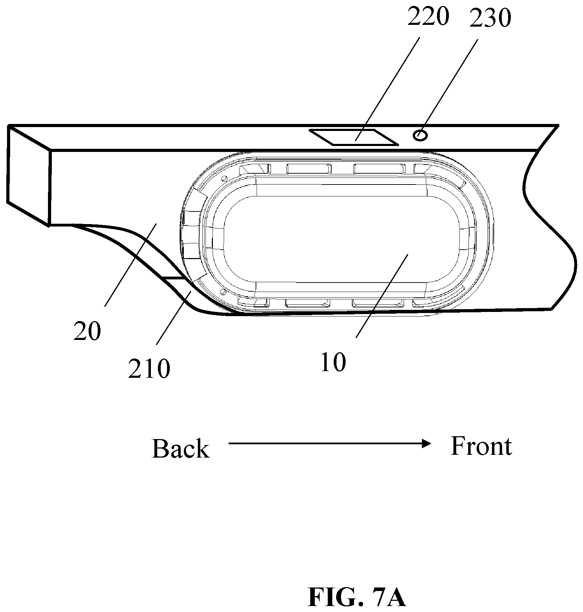

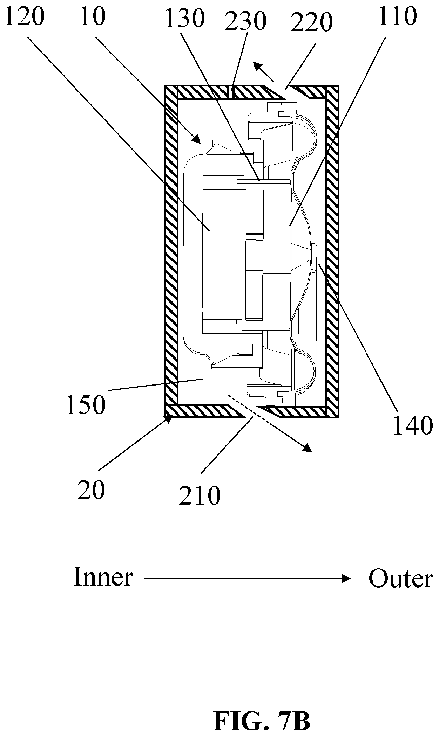

FIG. 7A is a schematic structural diagram of an eyeglass temple and a sound-producing device according to other embodiments of the present disclosure, and FIG. 7B is a schematic structural diagram of the eyeglass temple and the sound-producing device from another perspective according to some embodiments of the present disclosure. In some embodiments, as shown in FIG. 7A and FIG. 7B, the eyeglass temple 20 is provided with a sound-tuning hole 230 in communication with the back cavity 150. A distance between a centroid of an outer end face of the sound-tuning hole 230 and the centroid of the outer end face of the pressure relief hole 220 is less than a distance between the centroid of the outer end face of the sound-tuning hole 230 and the centroid of the outer end face of the sound outlet hole 210. In other words, the sound outlet hole 210 is farther from the sound-tuning hole 230 than the pressure relief hole 220. The outer end face of the sound-tuning hole 230 may be understood as an end surface of the sound-tuning hole 230 located on the outer wall surface of the housing of the eyeglass temple 20, and the centroid of the outer end face of the sound-tuning hole 230 may be understood as a geometric center of the end surface. Since the user primarily hears sound output from the sound outlet hole 210, configuring the sound outlet hole 210 to be farther from the sound-tuning hole 230 than the pressure relief hole 220 prevents sound output from the sound-tuning hole 230 from interfering with the sound output from the sound outlet hole 210.

In some embodiments, as shown in FIG. 7A and FIG. 7B, the sound-tuning hole 230 and the sound outlet hole 210 are located on different side walls of the eyeglass temple 20. In some embodiments, the sound-tuning hole 230 and the sound outlet hole 210 are located on opposite side walls of the eyeglass temple 20. As mentioned above, when the back cavity 150 resonates, the point of maximum sound pressure level appears near the position opposite to the sound outlet hole within the back cavity 150. Therefore, the sound-tuning hole 230 may be provided at a position in the back cavity 150 opposite to the position where the sound outlet hole 210 is located. Under this configuration, the sound-tuning hole 230 and the pressure relief hole 220 are provided on a same side of the eyeglass temple 20. For example, both the sound-tuning hole 230 and the pressure relief hole 220 are provided on the upper side wall of the housing of the eyeglass temple 20, and the sound outlet hole 210 is provided on the lower side wall of the housing of the eyeglass temple 20.

By providing the sound-tuning hole 230, a portion of the sound in the back cavity 150 can be output to the external environment through the sound-tuning hole 230. The transmission path of the sound within the back cavity 150 is shortened, which changes the frequency at which the standing wave is generated in the back cavity 150. The provision of the sound-tuning hole 230 further increases the resonant frequency of the back cavity 150. The structure formed by the sound-tuning hole 230, the sound outlet hole 210, and the back cavity 150 has a second resonant frequency. Without the sound-tuning hole 230, the structure formed by the sound outlet hole 210 and the back cavity 150 has the first resonant frequency. Due to the provision of the sound-tuning hole 230, the second resonant frequency is higher than the first resonant frequency.

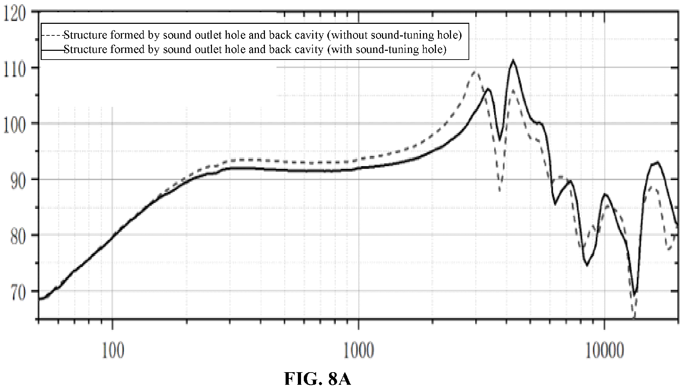

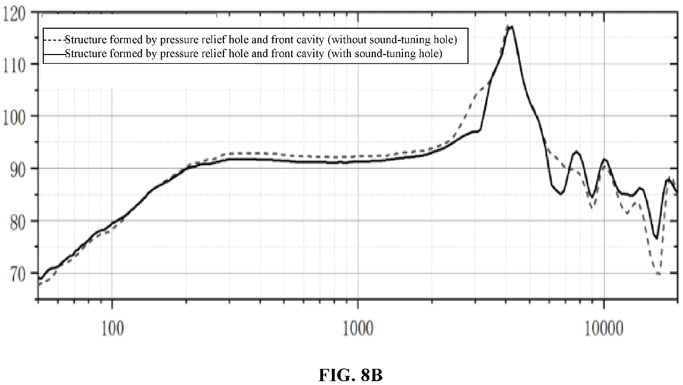

Frequency response curves of cavities with and without the sound-tuning hole 230 are compared below with reference to FIG. 8A-8B to further illustrate the technical effects of providing the sound-tuning hole 230. FIG. 8A is a diagram showing frequency response curves of the structure formed by the sound outlet hole and the back cavity with and without the sound-tuning hole 230 according to the present disclosure. FIG. 8B is a diagram showing frequency response curves of the structure formed by the pressure relief hole and the front cavity with and without the sound-tuning hole 230 according to the present disclosure. The horizontal axis in FIG. 8A and FIG. 8B represents frequency (Freq, unit: kHz), and the vertical axis represents output sound pressure level (SPL, unit: dB). The solid line in FIG. 8A represents the second resonant frequency of the structure formed by the sound-tuning hole 230, the sound outlet hole 210, and the back cavity 150 when the sound-tuning hole 230 is provided. The solid line in FIG. 8B represents the resonant frequency (corresponding to the third resonant frequency mentioned below) of the structure formed by the pressure relief hole 220 and the front cavity 140 when the sound-tuning hole 230 is provided. The dashed line in FIG. 8A represents the first resonant frequency of the structure formed by the sound outlet hole 210 and the back cavity 150 when the sound-tuning hole 230 is not provided. The dashed line in FIG. 8B represents the resonant frequency of the structure formed by the pressure relief hole 220 and the front cavity 140 when the sound-tuning hole 230 is not provided (corresponding to the third resonant frequency mentioned below). As can be seen from FIG. 8A, after providing the sound-tuning hole 230, the second resonant frequency is approximately 3.4 kHz, which is higher than the first resonant frequency (approximately 3 kHz). As can be seen from FIG. 8B, the provision of the sound-tuning hole 230 has almost no effect on the resonant frequency of the structure formed by the pressure relief hole 220 and the front cavity 140. However, since the second resonant frequency is higher than the first resonant frequency, the difference between the resonant frequency of the structure formed by the pressure relief hole 220 and the front cavity 140 and the second resonant frequency is relatively small.

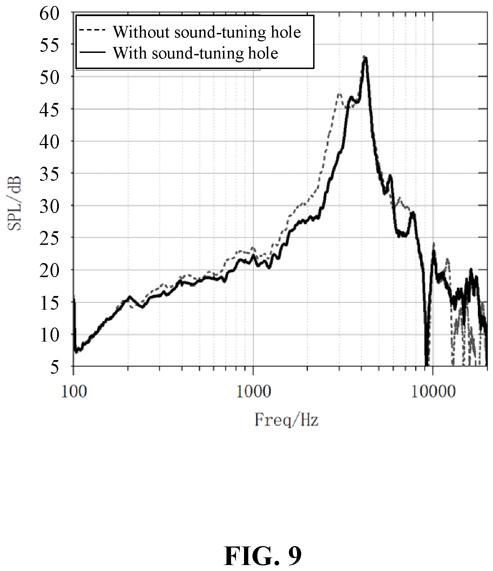

FIG. 9 is a diagram showing far-field sound leakage curves of eyeglasses with and without a sound-tuning hole according to some embodiments of the present disclosure. The horizontal axis in FIG. 9 represents frequency (Freq, unit: kHz), and the vertical axis represents output sound pressure level (SPL, unit: dB). The dashed line in FIG. 9 shows a far-field sound leakage curve of the eyeglasses 1 when the sound-tuning hole 230 is not provided, and the solid line in FIG. 9 shows a far-field sound leakage curve of the eyeglasses 1 when the sound-tuning hole 230 is provided. As shown in FIG. 9, after providing the sound-tuning hole 230, compared to the first resonant frequency and the second resonant frequency, the sound pressure level of far-field sound leakage is reduced in a frequency band below the first resonant frequency (approximately 3 kHz) due to the increase in resonant frequency.

In some embodiments, the second resonant frequency of the structure formed by the sound-tuning hole 230, the sound outlet hole 210, and the back cavity 150 is not less than 3 kHz. For example, the second resonant frequency may be 3.2 kHz, 3.4 kHz, 3.5 kHz, etc. As mentioned above, to ensure the sound leakage reduction effect of the eyeglasses 1, the resonant frequency of the back cavity 150 affects the frequency band where the acoustic dipole cannot achieve the sound leakage reduction effect (this band is above the resonant frequency of the back cavity 150). This configuration allows the acoustic dipole to provide the sound leakage reduction effect over a relatively wide frequency range and ensures effective performance at frequencies at least below 3 kHz.

In some embodiments, a difference between the third resonant frequency of the structure formed by the pressure relief hole 220 and the front cavity 140 and the second resonant frequency is not greater than 2 kHz. Based on the previous discussion, when the sound frequency is between the second resonant frequency and the third resonant frequency, the acoustic dipole cannot achieve sound leakage reduction. If the difference between the third resonant frequency and the second resonant frequency is too large, the frequency range where the acoustic dipole cannot achieve sound leakage reduction may be too wide, leading to poor sound leakage reduction performance of the eyeglasses 1. By providing the sound-tuning hole 230, the second resonant frequency is increased compared to the first resonant frequency, allowing the difference between the third resonant frequency and the second resonant frequency to be smaller (less than 2 kHz). This configuration narrows the frequency band where the acoustic dipole cannot achieve sound leakage reduction, resulting in better sound leakage reduction performance of the eyeglasses 1.

In some embodiments, when both the sound-tuning hole 230 and the pressure relief hole 220 are provided on the upper side surface of the eyeglass temple 20, the sound-tuning hole 230 is closer to the junction between the eyeglass temple 20 and the eyeglass rim 30 than the pressure relief hole 220. In other words, the sound-tuning hole 230 is located on the front side of the pressure relief hole 220. Since both the pressure relief hole 220 and the sound outlet hole 210 are located on the front side of the ear, for the sound field formed by the acoustic dipole, sound radiating toward the front side of the ear is difficult for the user to hear, which may increase sound leakage. By positioning the sound-tuning hole 230 on the upper side surface of the eyeglass temple 20 and arranged closer to the junction between the eyeglass temple 20 and the eyeglass rim 30 than the pressure relief hole 220, a portion of the sound radiated from the pressure relief hole 220 toward the front side of the eyeglasses 1 can be cancelled out, thereby reducing sound leakage of the eyeglasses 1.

In some embodiments, an opening area of the sound-tuning hole 230 is smaller than the opening area of the pressure relief hole 220. Since a sound wave is also transmitted outward through the sound-tuning hole 230, if the opening area of the sound-tuning hole 230 is too large, it may cause significant sound leakage through the sound-tuning hole 230. On one hand, if the sound pressure level of the sound leaked from the sound-tuning hole 230 is too high, it may cancel out a lage portion of the sound from the pressure relief hole 220, which may prevent the sound output from the pressure relief hole 220 from canceling with the sound output from the sound outlet hole 210 in the far field, thereby affecting the sound leakage reduction effect of the acoustic dipole. On the other hand, since the sound-tuning hole 230 also transmits sound from the back cavity 150 to the external environment, if the opening area of the sound-tuning hole 230 is too large, it may weaken the sound output from the sound outlet hole 210, affecting a listening volume of the user.

In some embodiments, a ratio of the opening area of the sound-tuning hole 230 to the opening area of the pressure relief hole 220 is less than or equal to 10%. For example, the ratio of the opening area of the sound-tuning hole 230 to the opening area of the pressure relief hole 220 may be 10%, 9%, 6%, 5%, 3%, etc. This configuration ensures that the sound-tuning hole 230 can effectively increase the resonant frequency of the back cavity 150 while avoiding excessive sound leakage through the sound-tuning hole 230.

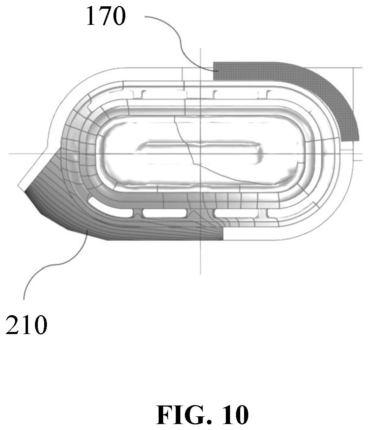

FIG. 10 is a schematic structural diagram of a sound-producing device and a sound-absorbing material according to some embodiments of the present disclosure. In some embodiments, as shown in FIG. 10, a sound-absorbing material 170 is provided on an inner side wall of the back cavity 150 opposite to the sound outlet hole 210. In some embodiments, the sound-absorbing material 170 may be a porous material such as sponge or foam. In some embodiments, the sound-absorbing material 170 may be attached or snap-fitted to the inner side wall of the back cavity 150. The boundary at the position opposite to the sound outlet hole 210 in the back cavity 150, where the standing wave is generated, was originally a hard boundary. By providing the sound-absorbing material 170 on the inner side wall of the back cavity 150 opposite to the sound outlet hole 210, the sound-absorbing material 170 can absorb a sound wave reaching that position instead of directly reflecting the sound wave, thereby changing the hard boundary to a soft boundary or an impedance boundary. This alters the frequency at which the standing wave is generated, thus increasing the resonant frequency of the back cavity 150.

In some embodiments, the eyeglass temple 20 is provided with a first sound-absorbing structure (not shown) acoustically connected to the back cavity 150. The first sound-absorbing structure includes a first sound-absorbing cavity and a first sound-guiding tube. The first sound-absorbing cavity is in communication with the back cavity 150 via the first sound-guiding tube. The first sound-absorbing structure may be a Helmholtz resonator. The first sound-absorbing structure has a first natural frequency, and the structure formed by the sound outlet hole 210 and the back cavity 150 has a first resonant frequency. An absolute value of a difference between the first natural frequency and the first resonant frequency is less than 1 kHz. In some embodiments, a position where the first sound-guiding tube is in communication with the back cavity 150 may be a position in the back cavity 150 opposite to the sound outlet hole 210. The first sound-absorbing structure may absorb a portion of the sound in the back cavity 150.

The first sound-absorbing cavity may be an empty cavity structure, and the shape of the empty cavity structure may be regular or irregular geometric shapes such as circular or rectangular. In some embodiments, the first sound-absorbing structure may cause the air in the first sound-absorbing cavity and/or the first sound-guiding tube to resonate by absorbing sound from the back cavity 150, thereby generating sound. In some embodiments, since the absolute value of the difference between the first natural frequency and the first resonant frequency is less than 1 kHz, it indicates that the first natural frequency is close to the first resonant frequency. The sound generated by the resonance of the first sound-absorbing structure may be opposite in phase to the sound absorbed from the back cavity 150. Merely by way of example, the difference between the first natural frequency and the first resonant frequency may be 0.3 kHz, 0.5 kHz, 0.9 kHz, etc. In some embodiments, the sound generated by the resonance of the first sound-absorbing structure may have a same or similar amplitude as the absorbed sound. Through this configuration, the sound generated by the resonance of the first sound-absorbing structure can cancel out the sound absorbed by the first sound-absorbing structure, thereby achieving a sound absorption effect.

The boundary at the position in the back cavity 150 opposite to the sound outlet hole 210, where the standing wave is generated, was originally a hard boundary. The first sound-absorbing structure may absorb a sound wave reaching the position instead of directly reflecting the sound wave, which can change the hard boundary to a soft boundary or an impedance boundary, thereby changing the frequency at which the standing wave is generated, and increasing the resonant frequency of the back cavity 150.

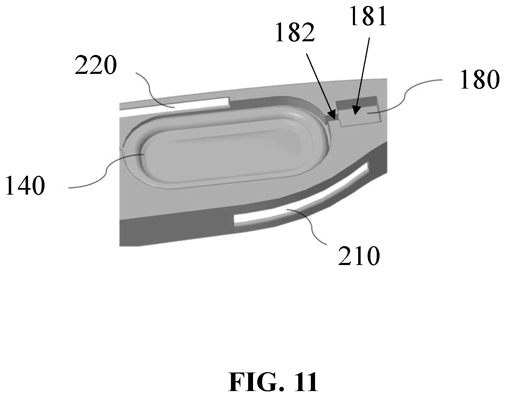

FIG. 11 is a schematic structural diagram of a sound-producing device and a second sound-absorbing structure according to some embodiments of the present disclosure. In some embodiments, as shown in FIG. 11, the eyeglass temple 20 is provided with a second sound-absorbing structure 180 acoustically connected to the front cavity 140. The second sound-absorbing structure 180 includes a second sound-absorbing cavity 181 and a second sound-guiding tube 182. The second sound-absorbing cavity 181 is in communication with the front cavity 140 via the second sound-guiding tube 182. The second sound-absorbing cavity 181 and the second sound-guiding tube 182 may form a Helmholtz resonator. The second sound-absorbing structure 180 has a second natural frequency and a corresponding quality factor. A structure formed by the sound outlet hole 210 and the back cavity 150 has a first resonant frequency. The structure of the second sound-absorbing cavity 181 is similar to the structure of the first sound-absorbing cavity, and the structure of the second sound-guiding tube 182 is similar to the structure of the first sound-guiding tube. When sound from the front cavity enters the second sound-absorbing structure 180, the air in the second sound-absorbing cavity 181 and/or the second sound-guiding tube 182 resonates.

The quality factor causes a sound absorption response curve of the second sound-absorbing structure 180 to have a first resonance peak and a second resonance peak. The first resonance peak corresponds to a first frequency, and the second resonance peak corresponds to a second frequency. The first frequency is lower than the second frequency. The second natural frequency is located between the first frequency and the second frequency. The quality factor, in resonance, represents a ratio of a natural frequency of an oscillator to a bandwidth thereof, thus determining the first frequency and the second frequency. The second natural frequency corresponds to a position of a sound-absorption valley in the sound absorption response curve of the second sound-absorbing structure 180. The first resonance peak and the second resonance peak form on two sides of the sound-absorption valley, so that the second natural frequency is located between the first frequency and the second frequency. An absolute value of a difference between the first resonant frequency and the first frequency is less than 1 kHz. In other words, the first frequency is close to the first resonant frequency. Merely by way of example, the difference between the first resonant frequency and the first frequency may be 0.3 kHz, 0.5 kHz, 0.9 kHz, etc.

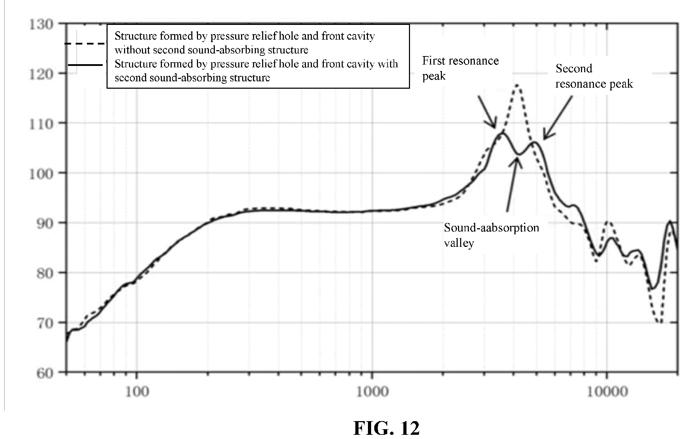

The technical effects of providing the second sound-absorbing structure 180 are explained below with reference to FIG. 12. FIG. 12 is a diagram showing frequency response curves of a structure formed by a pressure relief hole and a front cavity with and without a second sound-absorbing structure according to the present disclosure. The horizontal axis in FIG. 12 represents frequency (Freq, unit: kHz), and the vertical axis represents output sound pressure level (SPL, unit: dB). Due to the provision of the second sound-absorbing structure 180, as shown in FIG. 12, the peak near 4 kHz in the sound absorption response curve (indicated by the dashed line) of the comparative embodiment, which represents the structure formed by the pressure relief hole 220 and the front cavity 140 without the second sound-absorbing structure 180, is absorbed. As a result, the sound absorption response curve (indicated by the solid line) of the embodiment (in which the structure formed by the pressure relief hole 220 and the front cavity 140 includes the second sound-absorbing structure 180) exhibits a sound-absorption valley accompanied by a first resonance peak and a second resonance peak rising correspondingly on two sides of the sound-absorption valley. A frequency response amplitude near the resonant frequency of the back cavity 150 increases significantly. For effective sound leakage reduction using the acoustic dipole, it is desirable to maintain consistency between a frequency response amplitude of the back cavity 150 and a frequency response amplitude of the front cavity 140 as much as possible. After providing the second sound-absorbing structure 180, since the frequency (the first frequency) corresponding to the first resonance peak is close to the first resonant frequency, the frequency response amplitudes of both the front cavity 140 and the back cavity 150 increase simultaneously at frequencies near the resonant frequency of the back cavity 150. This allows the condition of consistent frequency response amplitudes between the front cavity 140 and the back cavity 150 to be satisfied over a wider frequency range, resulting in improved sound leakage reduction performance of the eyeglasses 1 across a broader frequency band.

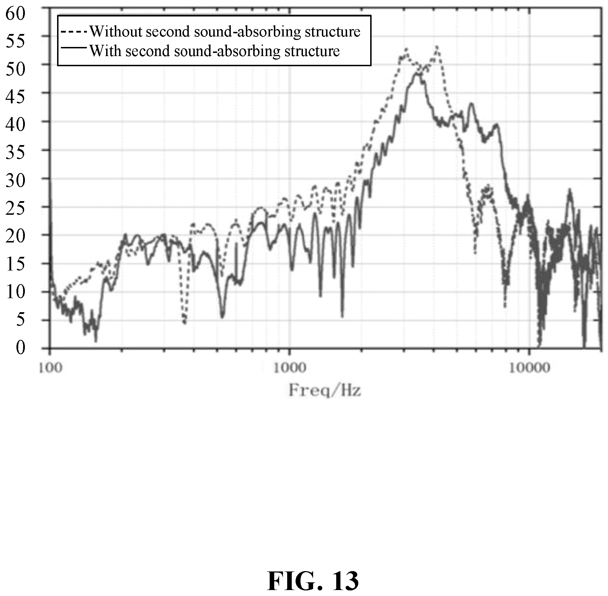

FIG. 13 is a diagram showing far-field sound leakage curves of eyeglasses with and without a second sound-absorbing structure according to some embodiments of the present disclosure. The horizontal axis in FIG. 13 represents frequency (Freq, unit: kHz), and the vertical axis represents output sound pressure level (SPL, unit: dB). The dashed line in FIG. 13 shows a far-field sound leakage curve of the eyeglasses 1 without the second sound-absorbing structure 180, and the solid line in FIG. 13 shows a far-field sound leakage curve of the eyeglasses 1 with the second sound-absorbing structure 180. As shown in FIG. 13, after providing the second sound-absorbing structure 180, the sound pressure level of the far-field sound leakage is reduced compared to the sound pressure level of the far-field sound leakage without the second sound-absorbing structure 180 when the sound frequency is below 3.5 kHz.

Having thus described the basic concepts, it may be rather apparent to those skilled in the art after reading this detailed disclosure that the foregoing detailed disclosure is intended to be presented as illustrative example and is not limiting. Various alterations, improvements, and modifications may occur and are intended to those skilled in the art, though not expressly stated herein. These alterations, improvements, and modifications are intended to be suggested by this disclosure, and are within the spirit and scope of the exemplary embodiments of the present disclosure.

Moreover, certain terminology has been configured to describe embodiments of the present disclosure. For example, the terms "one embodiment," "an embodiment," and/or "some embodiments" mean that a particular feature, structure, or characteristic described in connection with the embodiment is included in at least one embodiment of the present disclosure. Therefore, it is emphasized and should be appreciated that two or more references to "an embodiment" or "one embodiment" or "an alternative embodiment" in various portions of this disclosure are not necessarily all referring to the same embodiment. Furthermore, the particular features, structures, or characteristics may be combined as suitable in one or more embodiments of the present disclosure.

Similarly, it should be noted that in the foregoing description of embodiments of the present disclosure, various features are sometimes grouped together in a single embodiment, drawing, or description thereof for the purpose of streamlining the disclosure aiding in the understanding of one or more of the various inventive embodiments. This way of disclosure, however, is not to be interpreted as reflecting an intention that the claimed subject matter requires more features than are expressly recited in each claim. Rather, inventive embodiments lie in less than all features of a single foregoing disclosed embodiment.

In some embodiments, the numbers expressing quantities or properties configured to describe and claim certain embodiments of the present disclosure are to be understood as being modified in some instances by the term "about," "approximate," or "substantially." For example, "about," "approximate," or "substantially" may indicate ±20% variation of the value it describes, unless otherwise stated. Accordingly, in some embodiments, the numerical parameter set forth in the written description and attached claims are approximations that may vary depending upon the desired properties sought to be obtained by a particular embodiment. In some embodiments, the numerical parameter should be construed in light of the number of reported significant digits and by applying ordinary rounding techniques. Notwithstanding that the numerical ranges and parameter setting forth the broad scope of some embodiments of the present disclosure are approximations, the numerical values set forth in the specific examples are reported as precisely as practicable.

In closing, it is to be understood that the embodiments of the present disclosure disclosed herein are illustrating of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. A pair of eyeglasses, comprising:
a sound-producing device including a diaphragm and a magnetic circuit assembly, wherein a front cavity is formed at a side of the diaphragm away from the magnetic circuit assembly, and a back cavity is formed at a side of the diaphragm facing the magnetic circuit assembly;
an eyeglass temple configured to accommodate the sound-producing device, wherein the eyeglass temple is provided with a sound outlet hole and a pressure relief hole, the sound outlet hole is in communication with the back cavity, the pressure relief hole is in communication with the front cavity, in a wearing state of the eyeglasses, the sound outlet hole is closer to an ear canal opening of a user than the pressure relief hole, and an opening area of the sound outlet hole is greater than an opening area of the pressure relief hole; and
an eyeglass rim connected to the eyeglass temple.

2. The eyeglasses of claim 1, wherein the sound outlet hole is oriented toward the ear canal opening.

3. The eyeglasses of claim 2, wherein the pressure relief hole is provided on an upper side surface of the eyeglass temple.

4. The eyeglasses of claim 1, wherein
a first vector is formed from a centroid of an outer end surface of the pressure relief hole to a centroid of an outer end surface of the sound outlet hole, and
a second vector is formed from the centroid of the outer end surface of the sound outlet hole to a centroid of the ear canal opening, wherein
an angle between a line defined by the first vector and a line defined by the second vector ranges from 0° to 60°.

5. The eyeglasses of claim 1, wherein a first resonant frequency of a structure formed by the sound outlet hole and the back cavity ranges from 2 kHz to 4 kHz.

6. The eyeglasses of claim 1, wherein
the eyeglass temple is provided with a sound-tuning hole in communication with the back cavity, and
a distance between a centroid of an outer end surface of the sound-tuning hole and a centroid of an outer end surface of the pressure relief hole is smaller than a distance between the centroid of the outer end surface of the sound-tuning hole and a centroid of an outer end surface of the sound outlet hole.

7. The eyeglasses of claim 6, wherein a second resonant frequency of a structure formed by the sound-tuning hole, the sound outlet hole, and the back cavity is not less than 3 kHz.

8. The eyeglasses of claim 7, wherein a difference between the second resonant frequency and a third resonant frequency of a structure formed by the pressure relief hole and the front cavity is not greater than 2 kHz.

9. The eyeglasses of claim 6, wherein
the sound-tuning hole and the pressure relief hole are provided on an upper side surface of the eyeglass temple, and
the sound-tuning hole is closer to a junction between the eyeglass temple and the eyeglass rim than the pressure relief hole.

10. The eyeglasses of claim 6, wherein an opening area of the sound-tuning hole is smaller than the opening area of the pressure relief hole.

11. The eyeglasses of claim 10, wherein a ratio of the opening area of the sound-tuning hole to the opening area of the pressure relief hole is less than or equal to 10%.

12. The eyeglasses of any one of claims 1-11, wherein
the magnetic circuit assembly includes a magnet and a magnetic conduction member at least partially surrounding the magnet, a magnetic gap being formed between the magnet and the magnetic conduction member;
the sound-producing device further includes a voice coil connected to the diaphragm, at least a portion of the voice coil extending into the magnetic gap; and
a through-hole is provided on the voice coil or the magnetic conduction member.

13. The eyeglasses of claim 1, wherein a sound-absorbing material is provided on an inner side wall of the back cavity opposite to the sound outlet hole.

14. The eyeglasses of claim 1, wherein
the eyeglass temple is provided with a first sound-absorbing structure acoustically connected to the back cavity,
the first sound-absorbing structure includes a first sound-absorbing cavity and a first sound-guiding tube,
the first sound-absorbing cavity is in communication with the back cavity via the first sound-guiding tube,
the first sound-absorbing structure has a first natural frequency,
a structure formed by the sound outlet hole and the back cavity has a first resonant frequency, and
an absolute value of a difference between the first natural frequency and the first resonant frequency is less than 1 kHz.

15. The eyeglasses of claim 1, wherein
the eyeglass temple is provided with a second sound-absorbing structure acoustically connected to the front cavity,
the second sound-absorbing structure includes a second sound-absorbing cavity and a second sound-guiding tube,
the second sound-absorbing cavity is in communication with the front cavity via the second sound-guiding tube,
the second sound-absorbing structure has a second natural frequency and a corresponding quality factor,
a structure formed by the sound outlet hole and the back cavity has a first resonant frequency,
the quality factor causes a sound absorption response curve of the second sound-absorbing structure to have a first resonance peak and a second resonance peak,
a first frequency corresponding to the first resonance peak is lower than a second frequency corresponding to the second resonance peak,
the second natural frequency is located between the first frequency and the second frequency, and
an absolute value of a difference between the first resonant frequency and the first frequency corresponding to the first resonance peak is less than 1 kHz.

16. The eyeglasses of claim 1, wherein an axis of the sound outlet hole is inclined relative to a side wall on which the sound outlet hole is located.

17. The eyeglasses of claim 1, wherein an opening length of the sound outlet hole is greater than or equal to an opening length of the pressure relief hole.

18. The eyeglasses of claim 1, wherein an opening width of the sound outlet hole is greater than or equal to an opening width of the pressure relief hole.

19. The eyeglasses of claim 1, wherein
the eyeglass temple includes, along a length direction of the eyeglass temple, a wearing segment and a connecting segment,
the connecting segment is connected between the wearing segment and the eyeglass rim,
a lower side wall of the connecting segment and a lower side wall of the wearing segment are connected by an arc-shaped plate, and
at least a portion of the sound outlet hole is located on the arc-shaped plate.
